# EUROPEAN PATENT APPLICATION

(11) **EP 1 710 277 A1**
(43) Date of publication of application: **11.10.2006**
(21) Application number: 05704311.9
(22) Date of filing: 25.01.2005
(51) Int. Cl.: C08L 67/00, C08K 5/1515, C08K 5/29

(54) **POLYESTER ELASTOMER COMPOSITION**

(30) Priority: 29.01.2004 JP 2004022012
(71) Applicant: DAICEL CHEMICAL INDUSTRIES, LTD., Sakai-shi, Osaka 590-8501 (JP)
(72) Inventor: SAKANISHI, Yuichi Daicel Chemical Industries, Ltd., Otake-shi, Hiroshima 739-0601 (JP)
(74) Representative: Grünecker, Kinkeldey, Stockmair & Schwanhäusser Anwaltssozietät
(86) International application number: PCT/JP2005/001315
(87) International publication number: WO 2005/073315

(57) **Abstract**

The invention provides a polyester elastomer composition comprising (A) a polyester elastomer, (B) an epoxy compound having at least one epoxy group in the molecule thereof, and (C) a polycarbodiimide compound having at least two carbodiimido groups in the molecule thereof, wherein each of two carbon atoms both adjacent to each carbodiimido group has at least one group among (i) an alkyl group having 1 to 4 carbon atom(s) and (ii) a substituent exhibiting electronic effect of lowering reaction rate, and wherein the amounts of the epoxy compound (B) and the polycarbodiimide compound (C) are 0.01 to 10 parts by weight and 0.01 to 10 parts by weight, respectively, relative to 100 parts by weight of the polyester elastomer (A). The polyester elastomer composition is excellent in terms of hydrolysis resistance, heat resistance, oil resistance, wear resistance, and impact resistance.

## Description

### TECHNICAL FIELD

The present invention relates to a polyester elastomer composition comprising a polyester elastomer, an epoxy compound, and a polycarbodiimide compound. Products obtained by processing the polyester elastomer composition are excellent in hydrolysis resistance, heat resistance, oil resistance, impact resistance, and wear resistance.

### BACKGROUND ART

Polyester elastomers have been suitably employed for producing automobile parts or other articles, by virtue of their excellent physical properties such as heat resistance, oil resistance, and impact resistance. Polyester elastomers, however, having poor hydrolysis resistance, readily undergo thermal deterioration during processing thereof. Thus, polyester elastomers have serious problems, including sudden decrease in strength or impact resistance, variation in melt viscosity during molding, and poor durability for serving as automobile parts.

Conventionally, a variety of countermeasures have been taken so as to improve hydrolysis resistance of polyester elastomers.

Japanese Patent Application Laid-Open (kokai) No. 58-162654 (see Claims, lower left column to lower right column on page 364, and Examples 1 to 5) discloses that a mono-functional epoxy compound and a bi-functional epoxy compound are added in an amount of 0.3 to 10 wt. % to a polyester elastomer so as to improve hydrolysis resistance.

Japanese Patent Application Laid-Open (kokai) No. 59-152947 (see Claims, upper left column to lower left column on page 313, and Examples 1 and 2) discloses that an epoxy compound having one or more functionalities, a weather stabilizer, and a tertiary phosphine are added to a polyester elastomer.

Japanese Patent Application Laid-Open (kokai) No. 50-160362 (see Claims, lower right column on p. 364, and Examples 1 and 2) discloses that a polycarbodiimide is added in an amount of 0.1 to 10 parts by weight to a polyester elastomer so as to improve hydrolysis resistance.

Among these approaches for improving hydrolysis resistance of a polyester, an approach including addition of a polycarbodiimide is most advantageous. However, a conventionally employed polycarbodiimide has the drawback that it reacts with water, leading to a decrease in polycarbodiimide concentration; i.e., an intrinsic role thereof that it captures a protonic acid generated through hydrolysis of ester cannot fully be attained.

Thus, an object of the present invention is to provide, on the basis of improvement in hydrolysis resistance, a polyester elastomer composition having excellent heat resistance, oil resistance, wear resistance, and impact resistance.

### DISCLOSURE OF THE INVENTION

The present inventor has carried out extensive studies in order to overcome the drawback residing in conventional techniques, and has found that a polyester elastomer composition comprising a polyester elastomer (A) with specific amounts of an epoxy compound (B) and a specific polycarbodiimide compound (C) exhibiting low reactivity to water has remarkably enhanced hydrolysis resistance, as compared with conventionally attained hydrolysis resistance. The present invention has been accomplished on the basis of this finding.

Accordingly, a first mode of the present invention provides a polyester elastomer composition comprising (A) a polyester elastomer, (B) an epoxy compound having at least one epoxy group in the molecule thereof, and (C) a polycarbodiimide compound having at least two carbodiimido groups in the molecule thereof, wherein each of two carbon atoms both adjacent to each carbodiimido group has at least one group among (i) an alkyl group having 1 to 4 carbon atom(s) and (ii) a substituent exhibiting an electronic effect of lowering reaction rate, and wherein the amounts of the epoxy compound (B) and the polycarbodiimide compound (C) are 0.01 to 10 parts by weight and 0.01 to 10 parts by weight, respectively, relative to 100 parts by weight of the polyester elastomer (A).

A second mode of the present invention is drawn to a specific embodiment of the polyester elastomer composition of the first mode, wherein the polyester elastomer (A) contains a crystalline aromatic polyester as a hard segment and at least one species selected from the group consisting of an aliphatic polyester, an aliphatic polyether, and an aliphatic polycarbonate as a soft segment.

A third mode of the present invention is drawn to a specific embodiment of the polyester elastomer composition of the second mode, wherein the aliphatic polyester as the soft segment comprises a polycaprolactone component.

A fourth mode of the present invention is drawn to a specific embodiment of the polyester elastomer composition of the first mode, wherein the polycarbodiimide compound (C) is a compound represented by the following formula: 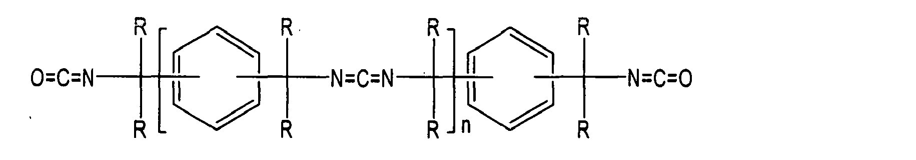 wherein R represents a hydrogen atom, an alkyl group having 1 to 4 carbon atom(s), or a substituent exhibiting an electronic effect of lowering reaction rate; two Rs linking to a certain carbon atom may be the same or different from each other, provided that the two Rs are not coincidentally hydrogen atoms; n is an integer of not less than 2.

### BEST MODES FOR CARRYING OUT THE INVENTION

Embodiments of the present invention will next be described.

### Polyester elastomer (A)

The polyester elastomer (A) employed in the present invention contains an aromatic polyester as a hard segment and at least one species selected from the group consisting of an aliphatic polyester, an aliphatic polyether, and an aliphatic polycarbonate as a soft segment.

No particular limitation is imposed on the mode of linkage of hard segments and soft segments, and examples of the mode may include a complete block in which an end of a hard segment is linked to an end of a soft segment; a block-random in which an end of a block is linked to a random portion; a random block in which block portions are present in a molecular chain at random; and a mixture thereof.

The aromatic polyester as the aforementioned hard segment has a melting point of 200 to 300°C, and preferably 210 to 280°C. Examples of the polyester may include a polybutylene terephthalate, a polyethylene terephthalate, a polyethylene naphthalate, and a mixture thereof. There may also be employed an analogous polyester where a portion of terephthalate is substituted by isophthalate and copolymer polyesters formed from p-hydroxybenzoic acid, 6-hydroxy-2-carboxynaphthalene, or a similar comonomer, so long as these polymers have a melting point falling within the above range.

The aforementioned soft segment has a melting point of 170°C or lower. Preferably, the soft segment exhibits no clear melting point.

Typical examples of the aliphatic polyester as the aforementioned soft segment may include polylactones, condensates of an aliphatic dibasic acid and an aliphatic glycol, condensates of an aliphatic hydroxyalkylcarboxylic acid, and condensates of a mixture thereof.

Examples of monomers for forming the polylactones may include ε-caprolactone, methylated ε-caprolactone, β-propiolactone, γ-butyrolactone, δ-valerolactone, and enantholactone. The polylactones may have the form of a homopolymer, a copolymer of two or more monomers, and a mixture of homopolymers, and a mixture of copolymers.

The polylactones may be produced through ring-opening polymerization of the aforementioned monomers in the presence of a mono-functional or polyfunctional initiator. Alternatively, the polylactones may be produced through condensation polymerization of the corresponding hydroxyalkylcarboxylic acid.

Examples of the aliphatic polyester may include polycaprolactones, caprolactone copolymers, polylactic acid-based or polyglycolic acid-based copolymers, condensates of a glycol such as ethylene glycol, 1,4-butanediol, or neopentyl glycol with adipic acid, and condensates of the above glycol with sebacic acid or succinic acid. Examples also includes co-condensates thereof and co-condensates with an aromatic polyester resin in an amount of not more than 30 wt.%.

Among aliphatic polyesters, polycaprolactones and adipic acid-derived polyesters are generally employed. However, the polycaprolactones are preferred from the viewpoint of heat resistance, durability, and flexibility.

The aliphatic polyether as the aforementioned soft segment is a polymer of a cyclic ether or a condensate of a glycol, and also includes a copolymer thereof with caprolactone. Concrete examples of the polyether may include a polytetramethylene glycol (a polytetramethylene ether glycol), a polyethylene glycol, and a polypropylene glycol. Of these, a polytetramethylene glycol is preferably employed.

The aliphatic polycarbonate as the aforementioned soft segment is a polymer of a cyclic carbonate or a condensate of a polyhydric phenol and/or glycol with phosgene or diphenyl carbonate and the like, and includes a copolymer thereof with caprolactone. Examples of the aliphatic polycarbonate may include a poly(dimethyltrimethylene carbonate), a poly(monomethyltrimethylene carbonate), a poly(trimethylene carbonate), and a poly(hexamethylene carbonate).

Regarding the ratio of the hard segment relative to the soft segment in the polyester elastomer (A) employed in the present invention, the polyester elastomer (A) has a hard segment content of 50 to 90 wt.%, and preferably 60 to 80 wt.%. When the hard segment content is less than 50 wt.%, heat resistance and oil resistance decrease, whereas when the hard segment content is in excess of 90 wt.%, impact resistance decreases. Needless to say, both cases are not preferred.

Incidentally, the sum of the hard segment content and the soft segment content is 100 wt.%. In the case where an aromatic polyester resin is copolymerized in an amount of not more than 30 wt. % in the soft segment, if the aromatic polyester resin has a melting point of 200 to 300°C, the incorporated aromatic polyester content is counted as part of the hard segment content.

The molecular weight of the polyester elastomer (A) may be determined through intrinsic viscosity measurement or GPC. Routine GPC measurement is conducted by use of chloroform/hexafluoroisopropanol = 9/1 (vol.) as a solvent and is reduced to standard polystyrene. The polyester elastomer (A) preferably has a molecular weight of 40,000 to 200,000, and more preferably 40, 000 to 150, 000, from the viewpoint of well balanced impact resistance and moldability.

### Epoxy compound (B)

No particular limitation is imposed on the epoxy compound (B) employed in the present invention, so long as the compound has at least one epoxy group in the molecule thereof.

Examples of the epoxy compound (B) may include bisphenol type epoxy compounds produced through reaction of bisphenol A, bisphenol F and so on with epichlorohydrin; novolak type epoxy compounds produced from a novolak resin and epichlorohydrin; glycidyl esters produced from an aliphatic or aromatic carboxylic acid and epichlorohydrin; alicyclic compound-derived epoxy compounds produced from an aliphatic compound having a hydroxyl group or a carboxyl group; glycidyl ethers produced from epichlorohydrin and an aliphatic or aromatic compound having an alcoholic hydroxyl group; epoxidized butadiene; and epoxy compounds produced from compounds having a double bond and a peroxide. Specific examples include methyl glycidyl ether, phenyl glycidyl ether, diethyleneglycol diglycidyl ether, phthalic acid diglycidyl ester, terephthalic acid diglycidyl ester, hexahydrophthalic acid diglycidyl ester, 3,4-epoxycyclohexylmethanol 3,4-epoxycyclohexanecarboxylic acid ester, an epoxidized polybutadiene, and an epoxidized styrene-butadiene-styrene block copolymer (epoxidized SBS).

Of these, epoxy compounds having not less than two epoxy groups are preferred.

The epoxy compound (B) serves as a hydrolysis inhibitor.

### Polycarbodiimide compound (C)

The polycarbodiimide compound (C) employed in the present invention has at least two carbodiimido groups in the molecule thereof. In the compound, each of two carbon atoms both adjacent to each carbodiimido group has at least one group among (i) a methyl or more bulky substituent (i.e., an alkyl group having 1 to 4 carbon atom(s)) and (ii) a substituent exhibiting electronic effect of lowering reaction rate. Examples of the substituent exhibiting effect of lowering reaction rate of the carbodiimido group with water may include alkoxy groups such as methoxy and ethoxy; halogen atoms such as chlorine and fluorine; haloalkyl groups such as chloroalkyl groups and fluoroalkyl groups; a nitro group; an amino group; a carboxyl group; a sulfo group (-SO₃-); a cyano group; an aryl group; an acyl group and so on. The polycarbodiimide compound (C) may be, for example, produced through heating and decarbonation of a diisocyanate compound serving as a starting material.

Concrete examples of the polycarbodiimide compound (C) may include compounds represented by the following formula: 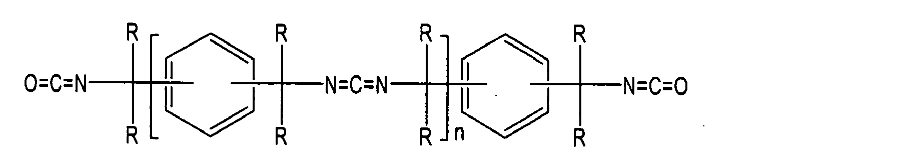 wherein R represents a hydrogen atom, an alkyl group having 1 to 4 carbon atom(s), or a substituent exhibiting an electronic effect of lowering reaction rate; two Rs linking to a certain carbon atom may be the same or different from each other, provided that the two Rs are not coincidentally hydrogen atoms; R is preferably a methyl group; n is an integer of not less than 2, preferably not less than 4; the compound (C) may be a mixture of species having different condensation degrees; an aromatic ring may be entirely or partially hydrogenated by hydrogen; and no particular limitation is imposed on the relative position between two carbodiimido groups or between a carbodiimido group and an NCO group which serve as substituent on an aromatic ring, with an meta- or a para-position being preferred).

The polycarbodiimide compound (C), which prevents a carbodiimide group thereof from reaction with water, selectively captures a protonic acid generated in a system of the elastomer composition when the composition is in contact with water or is processed.

Preferably, the polycarbodimiide compound (C) has not less than four carbodiimido groups in the molecule thereof and a molecular weight (number average) of not less than 500, more preferably not less than 1,000, from the viewpoint of hydrolysis resistance. The polycarbodiimide compound (C) has a carbodiimido group content of not less than 3 wt.%, and preferably 5 to 17 wt.%.

### Polyester elastomer composition

The polyester elastomer composition of the present invention comprises a polyester elastomer (A) in an amount of 100 parts by weight; an epoxy compound (B) in an amount of 0.01 to 10 parts by weight; and a polycarbodiimide compound (C) in an amount of 0.01 to 10 parts by weight. Preferably, the composition contains an epoxy compound (B) in an amount of 0.1 to 5 parts by weight and a polycarbodiimide compound (C) in an amount of 0.1 to 4 parts by weight. More preferably, the composition contains an epoxy compound (B) in an amount of 0.1 to 3 parts by weight and a polycarbodiimide compound (C) in an amount of 0.5 to 3 parts by weight.

When the epoxy compound (B) content or polycarbodiimide compound (C) content is in excess of the upper limit of the above range, molded products obtained from the polyester elastomer composition have reduced heat resistance, oil resistance, wear resistance, rigidity, and other properties, whereas when the content is excessively small, improvement of hydrolysis resistance cannot fully be attained. Both cases are not preferred.

Since the polyester elastomer composition of the present invention contains an epoxy compound (B) and a specific polycarbodiimide compound (C) in combination, hydrolysis resistance of a polyester elastomer can be suppressed, thereby minimizing thermal deterioration during processing of the composition.

The polyester elastomer composition of the present invention may be produced through a known means. Forexample, predetermined amounts of components are preliminary mixed by use of a mixer such as a Henschel mixer, a tumble blender, or a kneader, followed by kneaded with an extruder, or melt-kneaded with a heating roller or a Bunbury mixer, and pelletized or pulverized.

A variety of additives may be added in accordance with needs to the composition of the present invention, so long as the effects of the present invention are not impaired. Examples of the additives may include fillers, lubricants, reinforcing agents, stabilizers, weather-stabilizers, UV-absorbers, plasticizers, anti-static agents, and hue-improvers.

Processed products obtained from the polyester elastomer composition of the present invention are excellent in terms of heat resistance, oil resistance, wear resistance, impact resistance, and hydrolysis resistance. The polyester elastomer composition of the present invention may be used singly or in combination with another resin. Alternatively, the composition of the present invention may be laminated with another material.

The composition of the invention is employed as automobile parts, large machine parts, industrial machine parts, domestic electric article parts, etc. Examples of processed products include hoses, tubes, belts, gears, connectors, tanks, battery parts, sockets, wire coatings, bumpers and so on.

### EXAMPLES

The present invention will next be described in more detail by way of examples, which should not be construed as limiting the invention thereto.

### [Method of evaluation]

50% Modulus: JIS K 7113
Tensile strength at break: JIS K 7113
Tensile elongation at break: JIS K 7113
Notched Charpy impact strength: JIS K 7111
Vicat softening point test: JIS K 7206
Water resistance test: A test piece was immersed in hot water (95°C), followed by evaluated in accordance with JIS K 7113 (tensile test). Water resistance values shown in Table 1 are relative values, as determined when immersion time in hot water required for lowering tensile elongation at break of the test piece of Comparative Example 2 to 50% is 100%.

### [Materials employed]

### <Polyester elastomer (A)>

A-1: Polybutylene terephthalate-polycaprolactone block copolymer (product of Toyobo Co., Ltd., polybutylene terephthalate component (60 wt.%) serving as a hard segment, number average molecular weight of 70,000 determined through the aforementioned GPC)

### <Epoxy compound (B)>

B-1: Alicyclic epoxy compound (product of Daicel Chemical Industries, Ltd., 3,4-epoxycyclohexylmethyl (3,4-epoxycyclohexanecarboxylate), trade name "CELLOXIDE 2021P", epoxy equivalent: 128 to 145)
B-2: Glycidyl ester compound (product of Mitsui Chemicals, Inc., diglycidyl hexahydrophthalate, trade name "Epomik R540", epoxy equivalent: 151 to 172)

### <Polycarbodiimide compound (C)>

C-1: Polycarbodiimide compound derived from α,α,α',α'-tetramethyl-m-xylylene diisocyanate (product of Nisshinbo Industries, Inc. , trade name "Carbodilite V-05", carbodiimido group content: 5 wt.%, number average molecular weight of 1,000)

### <Comparative polycarbodiimide compound (D)>

D-1: Polycarbodiimide compound derived from hydrogenated methylene diphenyl-4,4'-diisocyanate (product of Nisshinbo Industries, Inc., trade name "Carbodilite HMV-8CA", carbodiimido group content: 8 wt.%, number average molecular weight of 2,000).

### <Examples 1 to 3>

In each Example, a polyester elastomer (A), an epoxy compound (B), and a polycarbodiimide compound (C) were mixed at proportions shown in Table 1 (unit: parts by weight). The mixture was melt-kneaded and extruded at 250°C by use of a biaxial extruder (30 mmφ). Extruded strands were cooled in a water tank, and the strands were cut by use of a pelletizer, thereby yielding pellets of each polyester elastomer composition. The pellets were dried at 120°C for five hours under nitrogen flow.

The above pellets were injection molded at 260°C by use of an injection molding machine, thereby producing tensile test pieces and Charpy impact test pieces.

The evaluation results are shown in Table 1. The test results indicate that, through addition of an epoxy compound and a specific carbodiimide compound to a polyester elastomer, water resistance is enhanced while mechanical characteristics are maintained. Thus, hydrolysis resistance is improved.

### <Comparative Example 1>

The procedure of Example 1 was repeated, except that the proportions of the components were changed to the values shown in Table 1. The results are also shown in Table 1. As compared with Example 1, water resistance is poor due to absence of epoxy compound. Thus, hydrolysis resistance is poor.

### <Comparative Example 2>

The procedure of Example 1 was repeated, except that the proportions of the components were changed to the values shown in Table 1. The results are also shown in Table 1. As is clear from Table 1, water resistance is poor when only epoxy compound is added to the polyester elastomer.

### <Comparative Example 3>

The procedure of Example 1 was repeated, except that the proportions of the components were changed to the values shown in Table 1. The results are also shown in Table 1. As is clear from Table 1, water resistance is considerably poor when the added polycarbodiimide compound is different from that of Example 1.

**Table 1**

| (unit of amount: parts by weight) | | | | | | | |
|---|---|---|---|---|---|---|---|
| | | Examples | | | Comparative Examples | | |
| | | 1 | 2 | 3 | 1 | 2 | 3 |
| Polyester | A-1 | 100 | 100 | 100 | 100 | 100 | 100 |
| Epoxy compound | B-1 | | | | | 0.4 | |
| | B-2 | 0.2 | 0.2 | 0.2 | | 0.4 | 0.2 |
| Polycarbodiimide | C-1 | 0.8 | 1.2 | 2 | 0.8 | | |
| | D-1 | | | | | | 0.8 |
| 50% Modulus | MPa | 16 | 16 | 15 | 16 | 15 | 15 |
| Tensile strength at break | MPa | 27 | 27 | 25 | 25 | 24 | 25 |
| Tensile elongation at break | % | 500 | 510 | 510 | 510 | 500 | 500 |
| Charpy impact strength (notched) | kJ/m² | NB | NB | NB | NB | NB | NB |
| Vicat softening temperature | °C | 170 | 170 | 171 | 170 | 170 | 171 |
| Water resistance | % | 160 | 180 | 200 | 140 | 100 | 140 |

### INDUSTRIAL APPLICABILITY

According to the present invention, a polyester elastomer composition which is excellent in terms of hydrolysis resistance, heat resistance, oil resistance, wear resistance, and impact resistance can be produced.

## Claims

1. A polyester elastomer composition comprising (A) a polyester elastomer, (B) an epoxy compound having at least one epoxy group in the molecule thereof, and (C) a polycarbodiimide compound having at least two carbodiimido groups in the molecule thereof, wherein each of two carbon atoms both adjacent to each carbodiimido group has at least one group among (i) an alkyl group having 1 to 4 carbon atom(s) and (ii) a substituent exhibiting an electronic effect of lowering reaction rate, and wherein the amounts of the epoxy compound (B) and the polycarbodiimide compound (C) are 0.01 to 10 parts by weight and 0.01 to 10 parts by weight, respectively, relative to 100 parts by weight of the polyester elastomer (A).

2. A polyester elastomer composition according to claim 1, wherein the polyester elastomer (A) contains a crystalline aromatic polyester as a hard segment and at least one species selected from the group consisting of an aliphatic polyester, an aliphatic polyether, and an aliphatic polycarbonate as a soft segment.

3. A polyester elastomer composition according to claim 2, wherein the aliphatic polyester as the soft segment comprises a polycarprolactone component.

4. A polyester elastomer composition according to claim 1, wherein the polycarbodiimide compound (C) is a compound represented by the following formula: 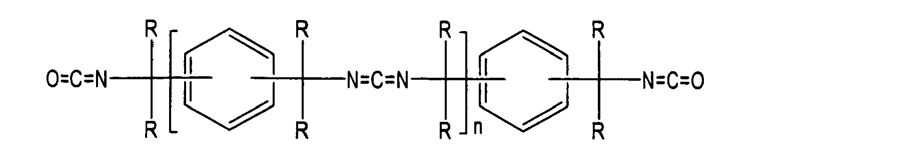 wherein R represents a hydrogen atom, an alkyl group having 1 to 4 carbon atom(s), or a substituent exhibiting an electronic effect of lowering reaction rate; two Rs linking to a certain carbon atom may be the same or different from each other, provided that the two Rs are not coincidentally hydrogen atoms; n is an integer of not less than 2.
